# FASCICULE DE BREVET EUROPEEN

(11) **EP 3 307 579 B1**
(45) Date de publication et mention de la délivrance du brevet: **01.04.2020**
(21) Numéro de dépôt: 16727459.6
(22) Date de dépôt: 01.06.2016
(51) Int. Cl.: B60K 11/08, F24F 13/15

(54) **DISPOSITIF D'OBTURATION D'ENTRÉE D'AIR DE FACE AVANT DE VÉHICULE AUTOMOBILE**
VORRICHTUNG ZUR ABSPERRUNG DES LUFTEINLASSES AUF DER VORDERSEITE EINES KRAFTFAHRZEUGS
DEVICE FOR BLANKING OFF THE AIR INLET ON THE FRONT FACE OF A MOTOR VEHICLE

(30) Priorité: 12.06.2015 FR 1555407
(43) Date de publication de la demande: 18.04.2018
(73) Titulaire: Valeo Systemes Thermiques, 78320 Le Mesnil Saint Denis (FR)
(72) Inventeur: GERBER, Sylvain, 91320 Wissous (FR)
(74) Mandataire: Tran, Chi-Hai
(86) Numéro de dépôt international: PCT/EP2016/062420
(87) Numéro de publication internationale: WO 2016/198304

(56) Documents cités:
- DE-A1-102010 060 253
- DE-A1-102011 006 114
- GB-A- 2 151 013
- US-A- 2 042 617
- US-A- 5 735 137
- US-B1- 6 966 596

## Description

La présente invention concerne les dispositifs d'obturation et plus précisément un dispositif d'obturation d'entrée d'air de face avant de véhicule automobile.

Les faces avant de véhicules automobiles sont généralement composées de deux entrées d'air principales dites voie haute et voie basse séparées par une poutre pare-choc. Derrière cette poutre pare-choc sont généralement placés les échangeurs de chaleur du véhicule automobile, comme par exemple celui utilisé pour la climatisation de l'habitacle ou encore celui utilisé pour le refroidissement du moteur.

Il est également connu de disposer, dans le trajet d'air passant par les entrées d'air principales, plus généralement la voie basse, un cadre support comportant une multiplicité de volets montés pivotants autour d'axes parallèles et propres à prendre une multiplicité de positions angulaires différentes, comprises entre une position d'ouverture et une position d'obturation, sous l'action de moyens de commande appropriés.

On obtient ainsi un dispositif d'obturation s'apparentant à une jalousie qui permet d'ajuster le débit d'air traversant les entrées d'airs et arrivant aux échangeurs de chaleur et ainsi d'optimiser l'efficacité de ces échangeurs de chaleur en fonction des besoins. De plus, à grande vitesse, les volets en position d'obturation permettent de diminuer le coefficient de traînée du véhicule et ainsi d'améliorer son aérodynamisme.

Généralement, le dispositif permettant le passage d'une position d'obturation à une position d'ouverture des volets comporte un actionneur qui peut être mécanique, électrique ou encore pneumatique, faisant pivoter les volets en synchronisme au moyen d'une bielle de pivotement.

Cependant, lors de la rotation des volets, la bielle les entraînant effectue un mouvement de translation sur deux axes, en hauteur et en profondeur. Ce mouvement sur deux axes et notamment le mouvement en profondeur oblige l'aménagement d'un espace libre pour permettre ce mouvement et donc le dispositif d'obturation doit avoir une certaine épaisseur compliquant ainsi le montage dudit dispositif d'obturation sur la face avant. De plus, il est une demande constante des constructeurs de réduire l'encombrement des éléments d'un véhicule automobile, notamment selon l'axe longitudinal dudit véhicule.

Le document DE 10 2011 006 114 A décrit un dispositif d'obturation selon le préambule de la revendication 1. Un des buts de la présente invention est donc de remédier au moins partiellement aux inconvénients de l'art antérieur et de proposer un dispositif d'obturation amélioré.

La présente invention concerne donc un dispositif d'obturation selon la revendication 1.

Le fait d'utiliser un tel élément de commande permet notamment un gain de place en profondeur. En effet, un élément de commande utilisant une bielle, doit avoir une épaisseur suffisante pour permettre à ladite bielle d'effectuer un mouvement en profondeur lors de son déplacement en hauteur pour ouvrir ou fermer les volets. L'élément de commande selon l'invention n'a pas besoin de prévoir un mouvement en profondeur car l'élément coulissant n'effectue ses déplacements qu'en hauteur. Le dispositif d'obturation selon l'invention peut donc ainsi être moins épais et donc prendre moins de place au sein de la face avant du véhicule automobile.

Selon l'invention, l'actionneur comprend un pignon de sortie et l'élément coulissant comprend une deuxième crémaillère engrenée avec le pignon de sortie de l'actionneur.

Selon le pignon de sortie tourne selon un axe de rotation perpendiculaire au plan général défini par les axes de pivotement des volets et que la deuxième crémaillère est alors orientée de sorte que ses dents pointent dans une direction parallèle au plan général défini par les axes de pivotement des volets afin de s'engrener avec le pignon de sortie.

Selon un aspect de l'invention, l'élément coulissant comporte une fenêtre dont un des bords porte la deuxième crémaillère.

Selon un autre aspect de l'invention, le dispositif d'obturation comporte deux ensembles de volets et l'élément de commande est placé entre lesdits ensembles de volets, l'élément coulissant comportant deux deuxièmes crémaillères, chacune étant engrenée avec les pignons des volets d'un ensemble de volets.

Selon un autre aspect de l'invention, entre le pignon de sortie et les pignons des volets, le rapport de transmission est inférieur à 1.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique en perspective de face d'un dispositif d'obturation en position d'obturation,
- la figure 2 montre une représentation schématique en perspective et en coupe du dispositif d'obturation de la figure 1,
- la figure 3 montre une représentation schématique en perspective d'un élément de commande

Les éléments identiques sur les différentes figures, portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

Dans la présente description on peut indexer certains éléments ou paramètres, comme par exemple premier élément ou deuxième élément ainsi que premier paramètre et second paramètre ou encore premier critère et deuxième critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tels critères.

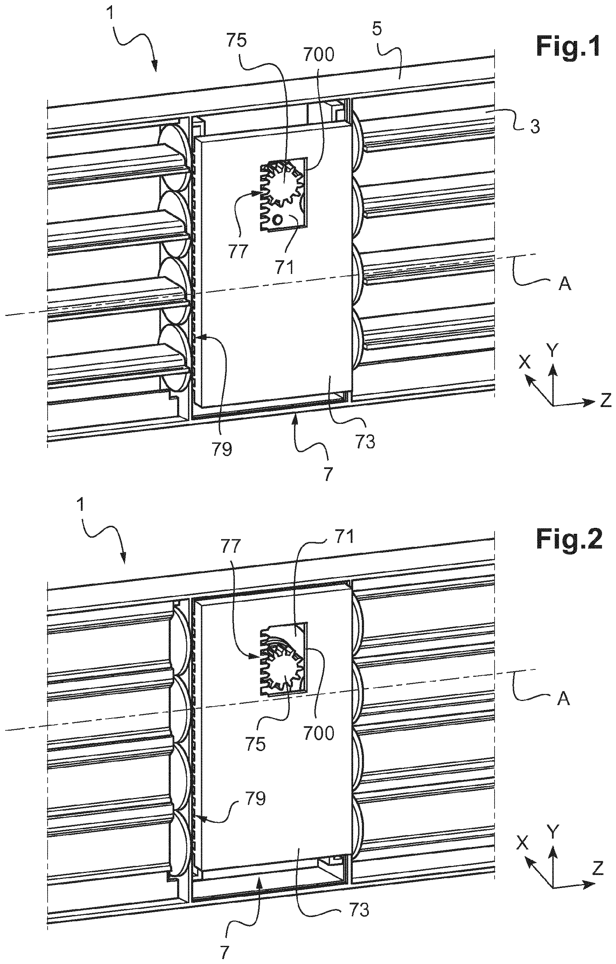

Les figures 1 et 2 montrent une représentation schématique en perspective d'un dispositif d'obturation 1 en position d'ouverture (figure 1) et en position d'obturation (figure 2). Ledit dispositif d'obturation 1 comporte un cadre support 5 sur lequel est installé au moins un ensemble volets 3. Les volets 3 peuvent pivoter autour d'axes de rotation généralement parallèles A définis par leur liaison avec le cadre support 5. Sur les différentes figures, cet axe de pivotement A est parallèle à l'axe Z du trièdre XYZ représenté, c'est à dire sur la largeur du véhicule automobile. L'axe X du trièdre correspondant à l'axe longitudinale du véhicule automobile et l'axe Y à sa hauteur. Au sein de cet ensemble de volets 3, lesdits volets 3 sont superposés et disposés parallèlement les uns avec les autres. Par superposé, on entend que les volets sont alignés sur l'axe Y. Autrement dit, les volets 3 sont agencés de telle manière qu'ils pivotent entre deux positions, une position d'obturation où l'entrée d'air est intégralement obstruée de sorte qu'un flux d'air ne puisse pas traverser l'entrée d'air, et une position d'ouverture où l'entrée d'air présente un espace pour le passage pour du flux d'air. A l'une des extrémités des volets 3 est placé un élément de commande 7 permettant la rotation des volets 3 entre une position d'ouverture, illustrée à la figure 1, où les volets 3 sont orientés de sorte qu'un flux d'air puisse traverser le dispositif d'obturation 1 et pénétrer ainsi au sein du véhicule comme par exemple dans le compartiment moteur, et une position d'obturation illustrée à la figure 2, où les volets 3 sont orientés de sorte qu'un flux d'air ne puisse pas traverser le dispositif d'obturation 1.

Il est possible d'avoir un dispositif d'obturation 1 d'une entrée d'air de face avant de véhicule automobile comportant une pluralité d'ensemble de volets 3 s'étendant sur toute la largeur du cadre support 5. Deux ensembles de volets 3 peuvent ainsi être séparés par un élément de commande 7 afin d'assurer leur rotation synchrone comme le montrent les figures 1 et 2.

L'élément de commande 7 comporte un actionneur 71. L'actionneur 71 peut être électrique, comme par exemple un moteur électrique. Ledit actionneur 71 est relié à un pignon de sortie 75 qu'il entraîne.

L'élément de commande 7 comporte également un élément coulissant 73 comprenant une deuxième crémaillère 77 s'engrenant avec le pignon de sortie 75 de l'actionneur 71. De ce fait, lorsque l'actionneur 71 émet un mouvement de rotation, il entraîne le coulissement de l'élément coulissant 73 par l'intermédiaire de la liaison pignon/crémaillère qui les unit.

Bien évidemment l'invention ne se limite pas qu'à l'utilisation de crémaillère et de pignon. Nous pourrions envisager d'utiliser selon un mode de réalisation non illustré tout moyen fonctionnant par complémentarité de forme, comme par exemple une encoche située au sein de l'élément coulissant et un crochet lié à l'actionneur déplaçant l'élément coulissant et permettant ainsi de faire pivoter les volets entre une position d'obturation et une position d'ouverture de l'entrée d'air.

Pour un gain de place, l'élément coulissant 73 est de préférence une plaque mobile plaquée contre le dispositif d'obturation et qui coulisse parallèlement au plan reliant les axes de rotation A des volets 3, soit selon l'axe Y du trièdre.

Les volets 3 comportent en outre, à au moins une de leurs extrémités, un pignon 31 placé sur leur axe de pivotement A et engrené avec une première crémaillère 79 de l'élément coulissant 73.

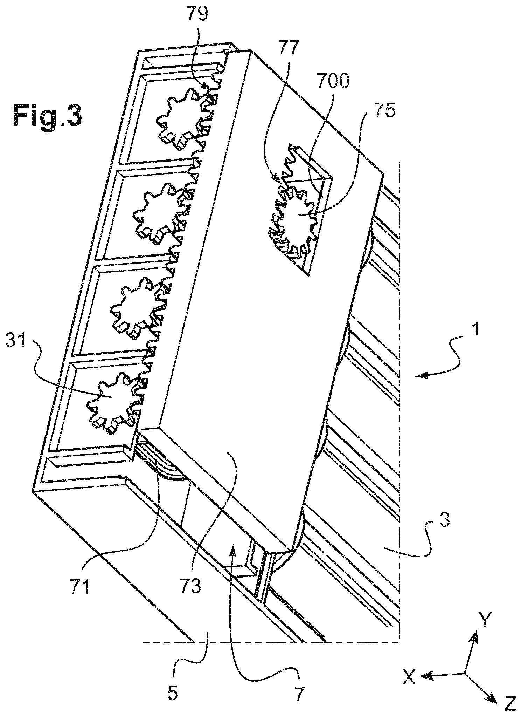

Tous les volets 3 étant reliés à l'élément coulissant 73, le passage d'une position d'ouverture à une position d'obturation est synchrone pour tous lesdits volets 3. En effet, le coulissement de l'élément coulissant 73 sous l'action de l'actionneur 71 entraîne la rotation synchrone des volets 3 de part la liaison pignon/crémaillère entre les volets 3 et l'élément coulissant 73, comme illustré sur la figure 3.

Le fait d'utiliser un tel élément de commande 7 permet notamment un gain de place en profondeur, c'est à dire selon l'axe X du trièdre. En effet, un élément de commande 7 utilisant une bielle, doit avoir une épaisseur suffisante pour permettre à ladite bielle d'effectuer un mouvement selon l'axe X lors de son déplacement selon l'axe Y pour ouvrir ou fermer les volets. L'élément de commande 7 selon l'invention n'a pas besoin de prévoir un mouvement selon l'axe X car l'élément coulissant 73 n'effectue ses déplacement que selon l'axe Y. Le dispositif d'obturation 1 selon l'invention peut donc ainsi être moins épais et donc prendre moins de place au sein de la face avant du véhicule automobile.

Comme le montrent les différentes figures, le pignon de sortie 75 peut tourner selon un axe de rotation parallèle à l'axe X du trièdre, soit perpendiculaire au plan général défini par les axes de pivotement A des volets 3. La deuxième crémaillère 77 est alors orientée de sorte que ses dents pointent dans une direction parallèle au plan général défini par les axes de pivotement A des volets 3 afin de s'engrener avec le pignon de sortie 75.

Toujours dans le but de réduire au maximum l'épaisseur du dispositif d'obturation 1 et notamment de son élément de commande 7, l'élément coulissant 73 peut comporter une fenêtre 700 dont un des bords présente la deuxième crémaillère 77. Le pignon de sortie 75 est inséré au moins partiellement dans la fenêtre 700 afin de s'engrener avec la deuxième crémaillère 77.

Selon un mode de réalisation non illustré, nous pouvons envisager un cas inverse où le pignon de sortie 75 peut tourner selon un axe de rotation parallèle à l'axe Z du trièdre, soit parallèlement au plan général défini par les axes de pivotement A des volets. La deuxième crémaillère 77 est alors orientée de sorte que ses dents pointent dans une direction perpendiculaire à l'axe de pivotement A des volets 3 afin de s'engrener avec le pignon de sortie 75. Il est aussi possible d'agencer deux éléments de commande à chaque extrémité du dispositif d'obturation afin de dégager l'espace central selon un mode de réalisation non illustré.

Le dispositif d'obturation 1 peut comporter deux ensembles de volets 3 comme cela est illustré sur les différentes figures. L'élément de commande 7 est alors placé entre lesdits ensembles de volets 3 et l'élément coulissant 73 comporte deux deuxièmes crémaillères 79. Chacune de ces deuxièmes crémaillères 79 est engrenée avec les pignons 31 des volets 3 d'un ensemble de volets 3 pour une rotation synchrone desdits volets 3.

Entre le pignon de sortie 75 et les pignons des volets 3, le rapport de transmission peut être inférieure à 1. Ce rapport de transmission permet une utilisation d'un actionneur 71 moins puissant et donc moins coûteux mais qui du fait de ce rapport de transmission est suffisant pour transmettre assez de force pour faire pivoter les volets 3 et ce même s'ils sont par exemple retenus collé par du gel en conditions froide. Ce rapport de transmission inférieur à 1 peut être obtenu en ayant des pignons 31 de volets 3 et un pignon de sortie 75 de diamètre différents ou ayant un nombre de dents différents.

Ainsi, on voit bien que le dispositif d'obturation 1 selon l'invention, du fait de son élément de commande 7 particulier, est moins épais que l'art antérieur et donc permet une intégration plus aisée au sein du véhicule automobile.

## Revendications

1. Dispositif d'obturation (1) pour entrée d'air de face avant de véhicule automobile, comprenant :
▪ un cadre support (5) dans lequel est installé un ensemble de volets (3) pivotants entre une position d'obturation et une position d'ouverture,
▪ au moins un élément de commande (7) pilotant le positionnement des volets (3),
l'élément de commande (7) comportant :
∘ un actionneur (71) électrique ,
∘ un élément coulissant (73) comprenant au moins une première crémaillère (79),
les volets (3) comportant à au moins une de leurs extrémités un pignon (31) placé sur leur axe de pivotement (A) et engrené avec la première crémaillère (79),**caractérisé en ce que** l'actionneur (71) comprend un pignon de sortie (75) et l'élément coulissant (73) comprend une deuxième crémaillère (77) engrenée avec le pignon de sortie (75) de l'actionneur (71),
**caractérisé en ce que** le pignon de sortie (75) tourne selon un axe de rotation perpendiculaire au plan général défini par les axes de pivotement (A) des volets (3) et que la deuxième crémaillère (77) est alors orientée de sorte que ses dents pointent dans une direction parallèle au plan général défini par les axes de pivotement (A) des volets (3) afin de s'engrener avec le pignon de sortie (75).

2. Dispositif d'obturation (1) selon la revendication 1, **caractérisé en ce que** l'élément coulissant (73) comporte une fenêtre (700) dont un des bords porte la deuxième crémaillère (77).

3. Dispositif d'obturation (1) selon l'une des revendications précédentes, **caractérisé en ce qu'**il comporte deux ensembles de volets (3) et que l'élément de commande (7) est placé entre lesdits ensembles de volets (3), l'élément coulissant (73) comportant deux deuxièmes crémaillères (79), chacune étant engrenée avec les pignons des volets (3) d'un ensemble de volets (3).

4. Dispositif d'obturation (1) selon l'une des revendications précédentes, **caractérisé en ce qu'**entre le pignon de sortie (75) et les pignons des volets (3), le rapport de transmission est inférieure à 1.

## Patentansprüche

1. Vorrichtung zum Verschließen (1) des vorderen Lufteinlasses eines Kraftfahrzeugs, die Folgendes aufweist:
• einen Tragrahmen (5), in dem ein Satz von Klappen (3) installiert ist, die zwischen einer Schließstellung und einer Offenstellung schwenken,
• mindestens ein Betätigungselement (7), das die Positionierung der Klappen (3) steuert,
wobei das Betätigungselement (7) Folgendes aufweist:
• ein elektrisches Stellglied (71),
• ein verschiebbares Element (73), das mindestens eine erste Zahnstange (79) aufweist,
wobei die Klappen (3) an mindestens einem ihrer Enden ein Ritzel (31) aufweisen, das sich auf ihrer Schwenkachse (A) befindet und mit der ersten Zahnstange (79) in Eingriff steht, **dadurch gekennzeichnet, dass** das Stellglied (71) ein Ausgangsritzel (75) aufweist und das verschiebbare Element (73) eine zweite Zahnstange (77) aufweist, die mit dem Ausgangsritzel (75) des Stellglieds (71) in Eingriff steht,
**dadurch gekennzeichnet, dass** das Ausgangsritzel (75) sich in einer Drehachse senkrecht zu der von den Schwenkachsen (A) der Klappen (3) definierten allgemeinen Ebene dreht und dass die zweite Zahnstange (77) dadurch so ausgerichtet ist, dass ihre Zähne in eine Richtung parallel zu der von den Schwenkachsen (A) der Klappen (3) definierten allgemeinen Ebene weisen, um in das Ausgangsritzel (75) eingreifen zu können.

2. Vorrichtung zum Verschließen (1) nach Anspruch 1, **dadurch gekennzeichnet, dass** das verschiebbare Element (73) ein Fenster (700) aufweist, von dem ein Rand die zweite Zahnstange (77) trägt.

3. Vorrichtung zum Verschließen (1) nach einem der vorausgehenden Ansprüche, **dadurch gekennzeichnet, dass** sie zwei Sätze von Klappen (3) aufweist und dass sich das Betätigungselement (7) zwischen diesen Sätzen von Klappen (3) befindet, wobei das verschiebbare Element (73) zwei zweite Zahnstangen (79) aufweist, von denen jede mit den Ritzeln der Klappen (3) eines Satzes von Klappen (3) in Eingriff steht.

4. Vorrichtung zum Verschließen (1) nach einem der vorausgehenden Ansprüche, **dadurch gekennzeichnet, dass** das Übertragungsverhältnis zwischen dem Ausgangsritzel (75) und den Ritzeln der Klappen (3) kleiner als 1 ist.

## Claims

1. Blanking device (1), for blanking off a motor vehicle front face air inlet, comprising:
▪ a support frame (5) in which is installed a set of flaps (3) pivoting between a blanking-off position and an open position,
▪ at least one control element (7) controlling the positioning of the flaps (3),
the control element (7) including:
∘ an electrical actuator (71),
∘ a sliding element (73) comprising at least one first rack (79),
the flaps (3) including, at least at one of their ends, a pinion (31) placed on their pivot axis (A) and meshing with the first rack (79), **characterized in that** the actuator (71) comprises an output pinion (75) and the sliding element (73) comprises a second rack (77) meshing with the outlet pinion (75) of the actuator (71),
**characterized in that** the outlet pinion (75) turns about a rotation axis perpendicular to the general plane defined by the pivot axes (A) of the flaps (3) and the second rack (77) is then oriented so that its teeth point in a direction parallel to the general plane defined by the pivot axes (A) of the flaps (3) in order to mesh with the outlet pinion (75) .

2. Blanking device (1) according to Claim 1, **characterized in that** the sliding element (73) includes a window (700) one of the edges of which carries the second rack (77).

3. Blanking device (1) according to either of the preceding claims, **characterized in that** it includes two sets of flaps (3) and the control element (7) is placed between said sets of flaps (3), the sliding elements (73) including two second racks (79) each meshing with the pinions of the flaps (3) of one set of flaps (3).

4. Blanking device (1) according to one of the preceding claims, **characterized in that** the transmission ratio between the outlet pinion (75) and the pinions of the flaps (3) is less than 1.
